# EUROPÄISCHE PATENTSCHRIFT

(11) **EP 1 597 120 B1**
(45) Veröffentlichungstag und Bekanntmachung des Hinweises auf die Patenterteilung: **24.04.2013**
(21) Anmeldenummer: 04712999.4
(22) Anmeldetag: 20.02.2004
(51) Int. Cl.: B60S 1/38

(54) **WISCHBLATT ZUM REINIGEN VON SCHEIBEN, INSBESONDERE VON KRAFTFAHRZEUGEN**
WIPER BLADE FOR CLEANING PANES, IN PARTICULAR MOTOR VEHICLE PANES
ESSUIE-GLACE DESTINE AU NETTOYAGE DE VITRES, NOTAMMENT DE VEHICULES AUTOMOBILES

(30) Priorität: 21.02.2003 DE 10307697; 01.08.2003 DE 10335394
(43) Veröffentlichungstag der Anmeldung: 23.11.2005
(73) Patentinhaber: ROBERT BOSCH GMBH, 70442 Stuttgart (DE)
(72) Erfinder: BAUER, Peter-Josef, 3300 Tienen (BE); WOUTERS, Dirk, B-3930 Zelem-Halen (BE); DE BLOCK, Peter, B-3545 Halen (BE); BEELEN, Hans, B-3540 Herk de Stad (BE)
(86) Internationale Anmeldenummer: PCT/DE2004/000318
(87) Internationale Veröffentlichungsnummer: WO 2004/076251

(56) Entgegenhaltungen:
- WO-A-01/92073
- DE-A- 10 120 467
- DE-A- 19 801 058
- US-A- 3 178 753
- US-A- 3 995 347
- PATENT ABSTRACTS OF JAPAN vol. 2003, no. 03, 5. Mai 2003 (2003-05-05) -& JP 2002 326564 A (PIA KK), 12. November 2002 (2002-11-12)

## Beschreibung

### Stand der Technik

Bei Wischblättern mit einem federbandartigen Tragelement soll dieses über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende formgebende Krümmung des unbelasteten Tragelements - also wenn das Wischblatt nur mit seinen beiden Enden an der Scheibe anliegt - werden die Enden der in Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung, weil während des Wischbetriebs die Wischleiste, beziehungsweise deren an der Scheibe anliegende Wischlippe, stets mit einer bestimmten Kraft gegen die Scheibe drücken muss. Das Tragelement ersetzt somit die aufwändige Tragbügelkonstruktion mit zwei in der Wischleiste angeordneten Federschienen, wie sie bei herkömmlichen Wischblättern praktiziert wird (DE-OS 15 05 397), weil das Tragelement neben der Verteilung des Anpressdrucks auch die notwendige Querversteifung der gummielastischen Wischleiste bewirkt. Bei dem bekannten Wischblatt wird nämlich die von einem Wischerarm auf den Hauptbügel ausgeübte, zur Scheibe gerichtete Auflagekraft auf zwei Krallenbügel übertragen und von diesen über vier Krallen auf die gummielastische Wischleiste verteilt. Die Federschienen dieses Wischblatts sorgen in erster Linie für eine Querversteifung der Wischleiste zwischen den Krallen, wenn das Wischblatt quer zu seiner Längserstreckung über die Scheibe verschoben wird.

Die Erfindung geht aus von einem Wischblatt nach dem Oberbegriff des Anspruchs 1. Bei einem bekannten Wischblatt dieser Art ((DE 101 20 467 A1) ist das Abdeckteil eine auf dem Wischblatt sitzende Windabweisleiste. Im Querschnitt gesehen hat diese zwei in Längsrichtung des Wischblatts angeordnete Wände, deren jeweils eine Längskante sich am Tragelement abstützend, die in Reihe angeordneten krallenartigen Ansätze aufweist. Diese Wände sind an ihren anderen Längskanten miteinander verbunden, so dass sich ein im wesentlichen dreieckiger Querschnitt der Windabweisleiste ergibt, wobei an dem einen Dreiecksschenkel die Windleitfläche der Windabweisleiste ausgebildet ist. Eine die beiden Dreiecksschenkel verbindende Zwischenwand sorgt für die erforderliche Stabilität der Windabweisleiste während des Wischbetriebs bei hohen Fahrgeschwindigkeiten. Zur Montage der derart versteiften Windabweisleiste auf das Tragelement muss diese deshalb in Längsrichtung so auf das Tragelement aufgeschoben werden, dass die Krallen der Ansätze die als Haltekanten dienenden Längs-Randbereiche des Tragelements untergreifen. Dieser Art der Montage kann allerdings wegen der Länge und der Flexibilität sowohl der Windabweisleiste als auch des Tragelements zu Störungen führen, insbesondere dann, wenn diese durch Automaten ausgeführt werden soll.

Ein Wischblett nach dem Oberbegriff des Anspruchs 1 ist aus den Dokumenten JP-A-2002326564, US-A-3178753, US-A-3995347 und DE-A-19801058 bekannt.

### Vorteile der Erfindung

Bei dem Wischblatt mit den kennzeichnenden Merkmalen des Anspruchs 1 ermöglicht die temporäre Abstandsvergrößerung zwischen den beiden Reihen von Ansätzen auf ein Maß das größer ist als der Abstand zwischen den diesen zugeordneten Haltekanten des Tragelements eine besonders einfache Montage. Durch den sich so ergebenden kurzen Positionierungsweg quer zu Längserstreckung des Tragelements bei maximaler Größe des Reihenabstandes, gelangen die Krallen nach Aufhebung der Abstandsvergrößerung in ihre Endposition, in der sie die Haltekanten des Tragelements untergreifen. Weiter ergibt sich dadurch eine betriebssichere formschlüssige Verbindung, so dass weitere Maßnahmen zum Befestigen der Windabweisleiste, - beispielsweise die Anordnung von Klebestellen - entfallen können, wie dies beispielsweise bei einem anderen bekannten Wischblatt (DE 100 44 913 A1) vorgeschlagen wird. Dort wird die das Abdeckteil bildende Windabweisleiste auf das Tragelement aufgebracht, wobei ein umlaufender Krallenrand als Positionierungshilfe dient, damit die erforderliche Klebeverbindung sachgerecht ausgeführt werden kann.

Die erfindungsgemäße Maßnahme lässt sich auf einfache Weise dadurch realisieren, dass die Rückstellkraft durch ein zwischen den Reihen der Ansätze befindliches und mit diesen verbundenes, elastisch verformbares Zwischenstück bewirkt wird.

Wenn das Zwischenstück sich über die gesamte Länge der die Reihen der Krallen aufweisenden Randstreifen des Abdeckteils erstreckt, ergibt sich eine besonders betriebssichere, dauerhafte Ausführungsform der Erfindung.

Erfindungsgemäß besteht das Zwischenstück aus einem Material, dessen Elastizität größer ist als die des Materials aus dem die mit den Ansätzen versehenen Randstreifen des Abdeckteils bestehen.

Je nach den an das Wischblatt gestellten, sich von Anwendungsfall zu Anwendungsfall ändernden Forderungen kann es von Vorteil sein, wenn das Materials für das Zwischenstück eine elastische Dehnbarkeit von mindestens 200 Prozent beziehungsweise 100 Prozent beziehungsweise 50 Prozent aufweist. Die Auswahl des geeigneten Materials kann sich dabei beispielsweise an der Länge des Wischblatts und/oder der Größe des Anpressdrucks und/oder anderen Kriterien orientieren.

Eine stabile Umfassung der Haltekanten durch die krallenartigen Ansätze erfordert eine bestimmte Dicke dieser Krallen. In Fortbildung der Erfindung ist die Dicke des Zwischenstücks kleiner als die Dicke der krallenartigen Ansätze. Dadurch lässt sich das Maß der Elastizität dieses Zwischenstücks den Erfordernissen anpassen. Es bleibt dabei dem Fachmann überlassen, ob er das Zwischenstück einstückig mit den Ansätzen und aus demselben Material wie diese herstellt, oder ob er für das Zwischenstück ein anderes, elastischeres Material vorsieht.

Zwecks einer soliden dauerhaften Sicherung des Abdeckteils am Tragelement des Wischblatts untergreifen die Ansätze die Haltekanten des Tragelements mit Krallen, deren quer zur Längserstreckung des Wischblatts gemessene Länge größer ist als die Dicke des Tragelements.

In der Praxis hat es sich gezeigt, dass es besonders vorteilhaft ist, die Länge der Krallen gegenüber der Dicke des Tragelements um den Faktor 1,7 zu vergrößern.

Die mit den krallenartigen Ansätzen zusammenarbeitenden Haltekanten ergeben sich ohne weitere Maßnahmen, wenn dazu die sich am bandartigen Tragelement befindlichen Längskanten verwendet werden. Bei einem Tragelement mit beispielsweise zwei in einer gemeinsamen Ebene zueinander benachbart angeordneten Federschienen bieten sich dazu in diesem Fall die beiden äußeren, voneinander abgewandten Längskanten der Federschienen an.

Eine besonders vorteilhafte, weil kostengünstige Weiterentwicklung der Erfindung sieht vor, dass an der von den Krallen abgewandten Oberseite des Abdeckteils eine Windabweisleiste angeordnet ist.

Um die vorgegebene Auflagekraftverteilung durch das Tragelement nicht zu beeinflussen, weist das für die Windabweisleiste verwendete Material eine größere Elastizität auf als das Materials aus den die Randstreifen des Abdeckteils bestehen.

Bei einer Ausführungsform des Wischblatts mit einem elastischen Zwischenstück kann es von Vorteil sein, wenn das Zwischenstück mit einer Windabweisleiste versehen ist, beziehungsweise wenn das Abdeckteil durch eine Windabweisleiste gebildet ist.

Als Material zur Herstellung der Windabweisleiste empfiehlt sich besonders ein Elastomer, dessen Shore-Härte A zumindest annähernd der Shore-Härte A der Wischleiste entspricht.

Weitere vorteilhafte Weiterbildungen und Ausgestaltungen der Erfindung sind in der nachfolgenden Beschreibung von in der Zeichnung dargestellten Ausführungsbeispielen angegeben.

### Zeichnung

In der Zeichnung zeigen
Figur 1 die Prinzipdarstellung eines erfindungsgemäßen Wischblatts in Seitenansicht,
Figur 2 die Schnittfläche eines Querschnitts entlang der Linie II-II durch das Wischblatt gemäß Figur 1, vergrößert dargestellt,
Figur 3 die Anordnung gemäß Figur 2, wobei eine als Abdeckteil dienende Windabweisleiste in einer Vormontagestellung dargestellt ist,
Figur 4 die Schnittfläche gemäß Figur 2 durch eine andere Ausführungsform des erfindungsgemäßen Wischblatts,
Figur 5 die Anordnung gemäß Figur 4, wobei eine als Abdeckteil dienende Windabweisleiste in einer Zwischen-Montagestellung dargestellt ist und
Figur 6 eine Seitenansicht auf ein Teilstück des Wischblatts gemäß Figur 4 in Richtung des Pfeils VI gesehen.

### Beschreibung der Ausführungsbeispiele

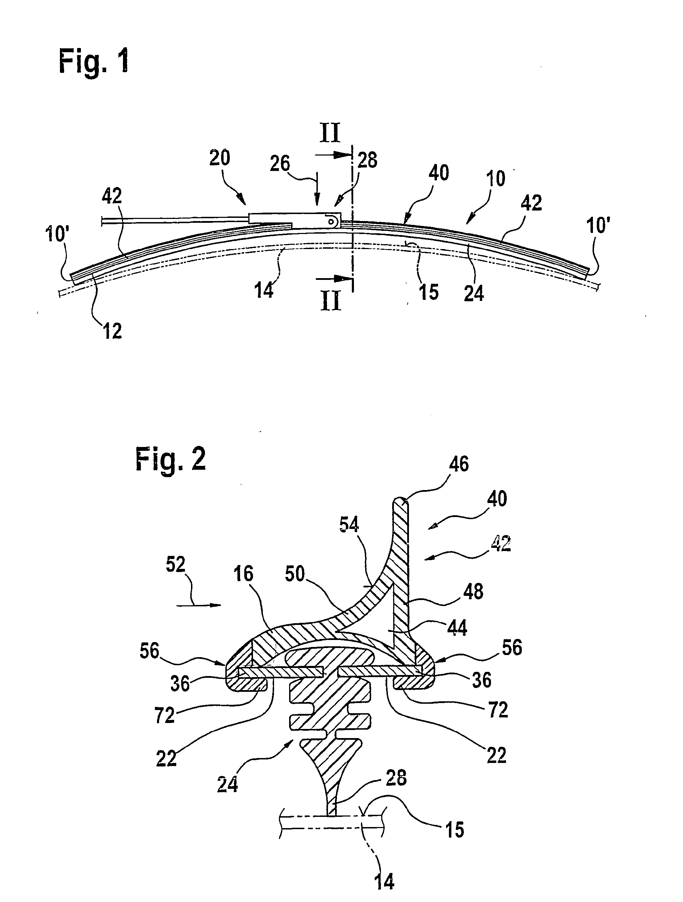

Ein in Figur 1 dargestelltes Wischblatt 10 weist ein bandartig langgestrecktes, federelastisches, ein- oder mehrteiliges Tragelement 12 auf, welches im unbelasteten Zustand in Längsrichtung gekrümmt ist. An der von der zu wischenden Scheibe 14 abgewandten konvexen, oberen beziehungsweise äußeren Bandseite 16 (Figuren 1 und 2) des Tragelements ist in dessen Mittelabschnitt eine beispielsweise flächig an dieser anliegende Anschlussvorrichtung 18 angeordnet, mit deren Hilfe das Wischblatt 10 mit einem an der Karosserie eines Kraftfahrzeugs geführten, angetriebenen Wischerarm 20 lösbar verbunden werden kann. An der der Scheibe zugewandten konkaven, unteren beziehungsweise inneren Bandfläche oder Bandseite 22 des gekrümmten Tragelements 12 ist eine langgestreckte, gummielastische Wischleiste 24 angeordnet, die sich längsachsenparellel zum Tragelement 12 ersteckt. An dem freien Ende des Wischerarms 20 sind nicht näher dargestellte Gegenanschlussmittel vorgesehen, welche mit der Anschlussvorrichtung 18 des Wischblatts im Sinne eines Gelenks zusammenwirken. Der Wischerarm 20 und damit auch das Wischblatt 10 sind in Richtung des Pfeiles 26 zur zu wischenden Scheibe belastet, deren zu wischende Oberfläche in Figur 1 durch die strichpunktierte Linie 15 angedeutet ist. Da die strichpunktierte Linie die stärkste Krümmung der Scheibenoberfläche darstellen soll ist klar ersichtlich, dass die Krümmung des mit seinen Enden 10' an der Scheibe 14 anliegenden, noch unbelasteten Wischblatts 10 stärker ist als die maximale Scheibenkrümmung. Es hat - unbelastet - also gegenüber der Scheibe einen konkaven Verlauf. Unter dem Anpressdruck (Pfeil 26) legt sich das Wischblatt 10 mit seiner die Wischarbeit verrichtenden Wischlippe 28 über seine gesamte Länge an der Scheibenoberfläche 15 an und geht in eine der Strecklage angenäherte Arbeitslage über. Dabei baut sich im bandartigen, federelastischen Tragelement 12 eine Spannung auf, welche für eine ordnungsgemäße Anlage der Wischleiste 24 beziehungsweise deren Wischlippe 28 über deren gesamte Länge an der Kraftfahrzeugscheibe 14 sorgt. Weil die in aller Regel sphärisch gekrümmte Scheibe nicht einen Abschnitt einer Kugeloberfläche darstellt, muss sich das Wischblatt 10 gegenüber dem Wischerarm 20 während seiner quer zur Längserstreckung des Wischblatts erfolgenden Wischbewegung ständig der jeweiligen Lage und dem Verlauf der Scheibenoberfläche 14 anpassen können. Deshalb ist die eine Schwingbewegung (Doppelpfeil 32) um die Gelenkachse der Anschlussverbindung ermöglichende gelenkige Verbindung zwischen Wischerarm 20 und Wischblatt 10 notwendig.

Im Folgenden soll nun auf die besondere Ausgestaltung des erfindungsgemäßen Wischblatts 10 anhand einer in Figur 2 dargestellten ersten Ausführungsform des Wischblatts näher eingegangen werden.

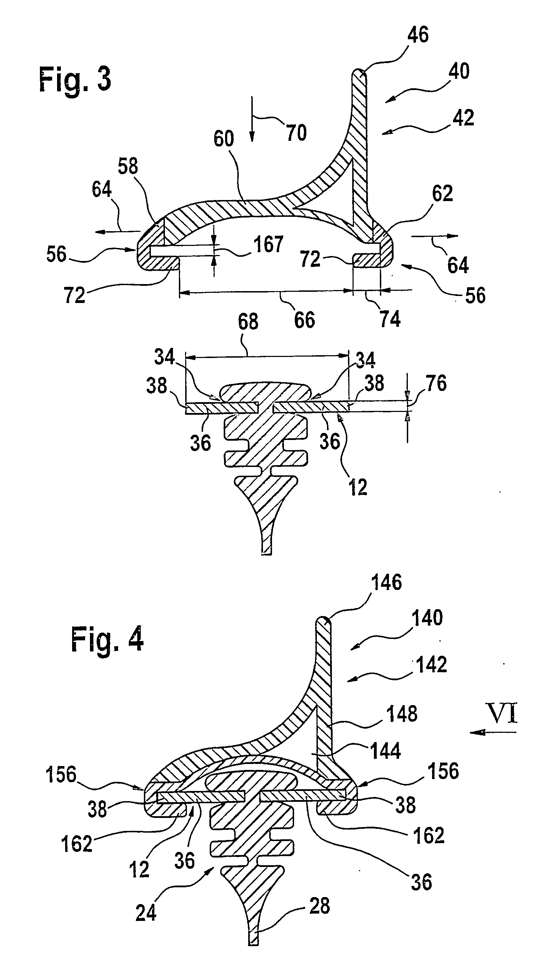

Die Ausführungsform gemäß Figur 2 des erfindungsgemäßen Wischblatts hat eine Wischleiste 24, die an ihren beiden einander gegenüberliegenden, voneinander abgewandten Längsseiten mit je einer zur Längsseite hin randoffenen Längsnut 34 versehen ist. Die Längsnuten 34 erstrecken sich über die gesamte Länge der Wischleiste 24 und dienen zur Aufnahme jeweils einer Federschiene 36. Die beiden Längsnuten 34 und damit auch die Federschienen 36 befinden sich in einer gemeinsamen, mit Abstand oberhalb der zu wischenden Scheibenoberfläche 15 angeordneten Ebene. Da die Breite der Federschienen 36 größer ist als die Tiefe der Längsnuten 34 ragen die Federschienen jeweils mit ihren äußeren Längs-Randbereichen beziehungsweise Randstreifen 38 aus den Längsnuten 34 heraus. Die ordnungsgemäße Sicherung der beiden zum Tragelement 12 gehörenden Federschienen 36 in ihren Längsnuten 34 kann durch verschiedene weitere Bauelemente - wie zum Beispiel durch die Anschlussvorrichtung 18 oder am Wischblatt angeordnete Endkappen übernommen werden. Bei den hier dargestellten Ausführungsbeispielen trägt dazu auch eine zweiteilige Windabweisleiste 40 bei, deren beide Teilstücke 42 beidseitig der Anschlussvorrichtung 18 an der konvex gekrümmten äußeren Bandseite 16 des Tragelements angeordnet sind. Die Windabweisleiste hat einen im wesentlichen dreieckigen Querschnitt, mit einem sich in Längserstreckung der Windabweisleiste erstreckenden der Gewichtsreduzierung dienenden Hohlraum 44, so dass sich - im Querschnitt gesehen - zwei von einer gemeinsamen Basis 46 aus divergierende, an der Basis miteinander verbundene Schenkel 48, 50 ergeben, von denen der Schenkel 50 an seiner Außenseite mit einer der Fahrtwind-Hauptströmungsrichtung (Pfeil 52) zugewandten, gekehlten Anströmfläche 54 versehen ist (Figur 2). Die beiden Schenkel 48 und 50 stützen sich mit ihren freien, der Scheibe 14 zugewandten Enden am Wischblatt beziehungsweise an den Längs-Randstreifen 38 des Tragelements 12 ab. Dazu umgreifen sie passend mit krallenartigen Ansätzen 56 zumindest abschnittsweise die als Haltekanten des Tragelements 12 dienenden Längs-Randstreifen 38 des Tragelements 12. Sie sitzen also an der oberen Bandseite 16 des Tragelements 12 auf und untergreifen mit ihren Krallen 72 jeweils dessen untere Bandseite 22. Weiter ist aus den Figuren 2 und 3 ersichtlich, dass die Windabweisleiste 40 beziehungsweise deren jeweiliges Teilstück 42 aus verschiedenen Materialien aufgebaut ist. Die Windabweisleiste 40 hat demnach drei sich über ihre gesamte Länge erstreckende Längsbereiche oder Längsstreifen 58, 60 und 62. Die Längsstreifen 58 und 62 sind aus einem anderen Material gefertigt als der mittlere, im wesentlichen die beiden Schenkel 48 und 50 umfassende Längsbereich 60 der Windabweisleiste 40 (Figur 3). Beim Ausführungsbeispiel gemäß Figur 2 sind die beiden Längs-Randstreifen 58 und 62 aus dem gleichen Material gefertigt. Der mittleren, durch die gegenläufige Schraffur kenntlich gemachte dritte Längsbereich 60 ist aus einem Material gefertigt, das deutlich elastischer ist als das Material aus welchem die Längsbereiche 58 und 62 bestehen. Dies soll jedoch nicht heißen, dass die beiden äußeren Längsbereiche 58 und 62 besonders steif ausgeführt werden sollen. Vielmehr sind auch diese Längsstreifen aus einem elastisch verformbaren Material, dessen Elastizität die eingangs geschilderten Kriterien zur vorschriftsmäßigen Anlage des Wischblatts an der Scheibenoberfläche 15 nicht negativ beeinflusst. Da die Windabweisleiste 40 beziehungsweise deren Teilstücke 42 aufgrund ihres gleichbleibenden Querschnitts extrudiert werden können, bietet sich zur Herstellung einer solchen Windabweisleiste das sogenannte Co-Extrusionsverfahren an, bei dem die streifenartigen Längsbereiche 58 bis 62 gemeinsam extrudiert und einstückig miteinander verschmolzen werden. Es ergibt sich dann eine Windabweisleiste mit einem sich über deren gesamte Länge erstreckenden besonders elastischen mittleren Längsbereich 60, der an seinen beiden Längsseiten von je einen Längsstreifen 58, 62 aus einem etwas festeren Material stabilisiert wird. Die mit den krallenartigen Ansätzen 56 versehenen Längsbereiche 58 und 62 bilden Gleitführungen, in denen eine Relativbewegung zwischen Windabweisleiste und Tragelement 12 reibungsarm möglich ist, wenn das Wischblatt während seiner Arbeit über Scheibenbereiche mit verschiedenen Krümmungsradien geführt wird.

Um die Windabweisleiste 40 beziehungsweise deren Teilstücke 42 auf das an der Wischleiste 24 vormontierte Tragelement 12 (Figur 3) aufzubringen, werden diese Bauteile in eine in Figur 3 dargestellte Montageposition gebracht und die Windabweisleiste 40 von ihren Längsbereichen 58, 62 aus in Richtung der Pfeile 64 gegen eine Rückstellkraft auf ein Maß 66 gedehnt, das größer ist als das Maß 68 zwischen den beiden voneinander abliegenden Außenkanten der Federschienen 36. Diese Situation ist in Figur 3 dargestellt. Danach wird beispielsweise die Windabweisleiste 40 in Richtung des Pfeiles 70 auf das Tragelement aufgesetzt - oder auch die mit dem Tragelement 12 versehene Wischleiste 24 in Gegenrichtung zwischen die Längsbereiche 58 und 62 der Windabweisleiste 40 gebracht und danach die Dehnspannung gemäß den Pfeilen 64 beendet, so dass die vom mittleren Längsbereich 60 nun ausgehende Rückstellkraft die vorschriftsmäßige Montageposition (Figur 2) zwischen diesen Bauteilen sicher stellt. In dieser Position untergreifen nun die Krallen 72 der Ansätze 56 die freiliegenden äußeren, als Haltekanten dienenden Randstreifen 38 der Federschienen 36 des Tragelements 12 an dessen konkav gekrümmter inneren Bandfläche 22 (Figur 2). In dieser Betriebsposition ist besonders darauf zu achten, dass die krallenartigen Ansätze 56 nicht an die Außenseiten der Federschienen angepresst werden, sondern dass die Federschienen 36 allseitig spielarm geführt sind. Um eine besonders betriebssichere Verbindung zu erreichen, hat es sich als zweckmäßig erwiesen, wenn die Länge 74 der Krallen 72 etwa um einen Faktor 1,7 größer ist als die Dicke 76 des Tragelements beziehungsweise der Federschienen 36 (Figur 3). Je nach Anwendungsfall ist es zweckmäßig, für den mittleren Längsbereich 60 der Windabweisleiste 40 ein Material mit einer Dehnbarkeit von 50 Prozent bis zu 200 Prozent auszuwählen. Das Maß für die Dehnbarkeit dieses Längsbereichs 60 orientiert sich dabei auch an der Länge 74 der erforderlichen Krallen 72, damit die Montage dieser beiden Bauteile 40 und 24, 36 auf dem kurzen Montageweg in Richtung des Pfeiles 70 erfolgen kann.

Es versteht sich von selbst, dass wie schon erwähnt die Sicherung der Federschienen an der Wischleiste 24 nicht zwangsläufig durch eine Windabweisleiste übernommen werden muss. Eine solche Sicherung kann auch durch andere, an der äußeren, konvex gekrümmten Bandfläche des Tragelements angeordnete Abdeckteile bewirkt werden.

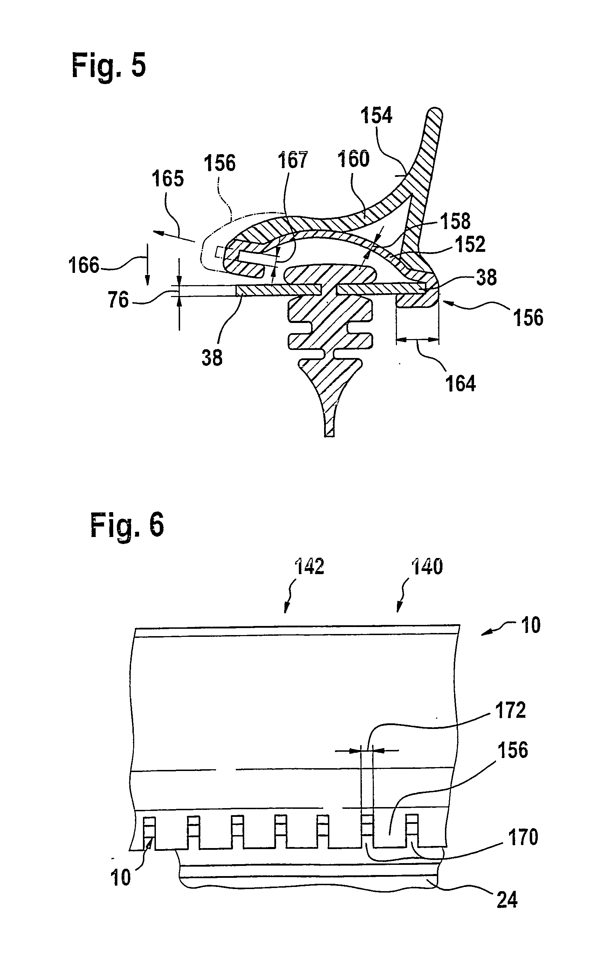

Eine andere Ausführungsform des erfindungsgemäßen Wischblatts soll im folgenden anhand der Figuren 4 und 5 erläutert werden. Der grundsätzliche Aufbau dieses Wischblatts entspricht dem oben beschriebenen Aufbau des Wischblatts gemäß den Figuren 2 und 3. Deshalb werden für Wischleiste und das Tragelement die schon verwendeten Bezugszeichen übernommen. Auch dieses Wischblatt ist mit einer Windabweisleiste versehen, die sich jedoch von der Windabweisleiste 40 der schon beschriebenen Ausführungsform unterscheidet. Die auch als Spoiler zu bezeichnende Windabweisleiste gemäß den Figuren 4 und 5 ist deshalb mit der Bezugszahl 140 versehen worden. Sie hat jedoch ebenfalls im Querschnitt gesehen einen im wesentlichen dreieckigen Aufbau mit von einer gemeinsamen Basis 146 aus divergierenden Schenkeln 148, 150 zwischen denen ein Hohlraum 144 verbleibt. Es liegt in der Natur eines Wischblatts mit der schon erwähnten Anschlussvorrichtung 18, dass auch bei der Anordnung gemäß den Figuren 4 und 5 die Windabweisleiste 140 zwei Teilstücke 142 aufweist. Der Schenkel 150 der Windabweisleiste 140 ist mit der der Fahrtwind-Hauptströmungsrichtung zugewandten Anströmfläche 154 versehen. Die freien Enden der Schenkel 148, 150 weisen ebenfalls krallenartige Ansätze 156 auf, welche für eine vorschriftsmäßige Verbindung zwischen Tragelement 12 und Windabweisleiste 140 sorgen. Die Windabweisleiste 140 ist aus einem elastischen Material vorzugsweise einem Kunststoff gefertigt. Wie die Figuren 4 und 5 zeigen, wird für die Gestaltung der krallenartigen Ansätze 156 ein anderer Kunststoff verwendet als für die Bildung der Schenkel 148, 150. Beiden Kunststoffen ist jedoch gemeinsam, dass ihre Elastizität so bemessen ist, dass die durch das Tragelement 12 zu erreichende Verteilung des Anpressdrucks auf die gesamte Länge des Wischblatts nicht nachteilig beeinflusst wird. Das Material das zur Bildung der krallenartigen Ansätze 156 verwendet wird, ist jedoch etwas härter als das für die Schenkel 148, 150 verwendete Material. Weiter zeigen die Figuren 4 und 5, dass die krallenartige Ansätze 156 über die gesamte Länge der Windabweisleiste durch ein als dünne Wand 152 ausgebildetes Zwischenstück miteinander verbunden sind, welches den Hohlraum 144 zur Wischleiste 24 hin abschließt. Die Dicke 158 dieser Wand 152 ist deutlich geringer als die Dicke 160 der krallenartige Ansätze 156. Es ergeben sich somit zwei mit Abstand voneinander liegende Randstreifen mit den krallenartigen Ansätzen 156, welche durch die dünne Wand 152 einstückig miteinander verbunden sind. An der vom Tragelement abgewandten Oberseite der Wand 152 sitzen die an der Basis 146 miteinander verbundenen Schenkel 148, 150. Wie Figur 4 zeigt, untergreifen die krallenartigen Ansätze 156 mit ihren Krallen 162 die Federschienen 36 des Tragelements 12. Die Abstimmung zwischen Krallenweite 167 und der Dicke 76 der Federschienen 36 ist so getroffen, dass eine möglichst spielarme, aber leichtgängige Verbindung zwischen dem Tragelement 12 und der Windabweisleiste 140 sichergestellt ist. Eine besonders vorteilhafte, betriebssichere Verbindung ergibt sich dadurch, dass die quer zur Längserstreckung des Wischblatts gemessene Länge 164 der Krallen 162 größer ist als die Dicke 76 der Federschienen 36. Auch hier hat es sich als vorteilhaft erwiesen, wenn die Länge 164 der Krallen 162 um den Faktor 1,7 größer ist als die Dicke 76 der Federschienen 36.

Die Montage des Spoilers 140 beziehungsweise dessen Teilstücke 142 am Tragelement 12 wird anhand der Figur 5 beschrieben. Zunächst wird die eine Krallenreihe in der dargestellten Weise an dem einen äußeren Längs-Randstreifen 38 des Tragelements 12 eingehängt und danach die mit der anderen Reihe der krallenartigen Ansätze 156 versehene Längsseite der Windabweisleiste gegen eine Rückstellkraft in Richtung des Pfeiles 165 gedehnt, bis sich diese Krallenreihe außerhalb des Tragelements befindet (in Figur 5 strichpunktiert gezeichnet). Danach kann der Spoiler in Richtung des Pfeiles 166 nach unten gekippt und die Dehnspannung aufgehoben werden. Unter dem Einfluss der Rückstellkraft gelangt der Spoiler in seine in Figur 4 dargestellte Betriebslage, wobei die äußeren Randstreifen 38 der beiden Federschienen 36 als Haltekanten dienen. Da bei dieser Ausführungsform der Erfindung zur Montage die Krallen einer Reihe schon am Tragelement eingehängt sind, genügt in diesem Fall gegenüber der Ausführung nach den Figuren 2 und 3 die halbe Dehnstrecke, um die Montage auszuführen. Auch wenn die Dehnbarkeit des für die krallenartigen Ansätze 156 und die dünne Wand 152 verwendete Material eine geringere Elastizität aufweist als das für die Schenkel 148, 150 verwendete Material, ermöglicht die Schwächung der Wand 152 auf das Maß 158 die Dehnbarkeit dieses Bereichs. Dabei wird die Dicke 158 der Wand 152 nach den Erfordernissen hinsichtlich des erforderlichen Dehnmaßes und/oder nach der Elastizität des für diese gewählten Materials bestimmt. Es ist klar, dass auch die Schenkel 148, 150 im Bereich der Basis 146 die zur Dehnung notwendige Elastizität aufweisen.

Wie Figur 6 zeigt, kann es zweckmäßig sein, die auch als Abdeckteil anzusehende Windabweisleiste im Bereich ihrer krallenartigen Ansätze mit Querschlitzen 170 zu versehen, die in Längsrichtung des Wischblatts mit Abstand voneinander angeordnet sind und dadurch die Flexibilität der Windabweisleiste 40 beziehungsweise 140 verbessern. Es ergeben sich so Reihen mit Abstand zueinander und hintereinander angeordneten Haltekrallen. Wenn keine Querschlitze vorgesehen sind, sind innerhalb der jeweiligen Reihen von Krallen diese ohne Abstand zueinander angeordnet und miteinander verbunden, so dass sich zwei einstückige Krallenreihen ergeben.

Beiden Ausführungsformen der Erfindung ist gemeinsam, dass der Abstand zwischen zwei Reihen der Ansätze 56 beziehungsweise 156 mit den Krallen 72 beziehungsweise 162 wenigstens abschnittsweise quer zur Längserstreckung des Wischblatts 10 gegen eine Rückstellkraft vergrößerbar ist. Dadurch ergibt sich die Möglichkeit eines kurzen Montagewegs (Pfeile 70 beziehungsweise 166), wenn die beiden Bauteile miteinander verbunden werden sollen. Diese Maßnahme ist bei der Ausführungsform gemäß den Figuren 2 und 3 durch die Anordnung des als hoch-elastischen mittleren Längsbereichs 60 ausgebildeten Zwischenstücks möglich. Bei der Ausführungsform gemäß den Figuren 4 und 5 wird diese erforderliche Elastizität durch die Schwächung des Verbindungsstücks zwischen den beiden Reihen von Krallen 162 zu einer dünnen Wand 152 erreicht.

## Patentansprüche

1. Wischblatt zum Reinigen von Scheiben insbesondere von Kraftfahrzeugen, mit einer gummielastischen Wischleiste (24), die an der einen Bandfläche (22) eines bandartig langgestreckten federelastischen Tragelements (12) angeordnet an der Scheibe (14) anlegbar ist, wobei die andere Bandfläche (16) des Tragelements durch eine mindestens zwei Schenkel (48, 50) aufweisende Windabweisleiste (40, 140) zumindest abschnittsweise überdeckt ist, die mit in Längsrichtung des Wischblatts reihenartig angeordneten krallenartigen Ansätzen (56) Haltekanten des Tragelements untergreifen, und die Schenkel durch ein Zwischenstück (60) verbunden sind, **dadurch gekennzeichnet, dass** der Abstand zwischen zwei Reihen der Ansätze wenigstens abschnittsweise quer zur Längserstreckung des Wischblatts (10) gegen eine Rückstellkraft vergrößerbar ist, wobei das für die krallenartigen Ansätze verwendete Material eine geringere Elastizität aufweist als das für die Schenkel (48, 50; 148, 150) verwendete Material.

2. Wischblatt nach Anspruch 1, **dadurch gekennzeichnet, dass** die Rückstellkraft durch das zwischen den Reihen der Ansätze (56) befindliche und mit diesen verbundene elastisch verformbare Zwischenstück (60 beziehungsweise 152) bewirkt wird.

3. Wischblatt nach Anspruch 2, **dadurch gekennzeichnet, dass** das Zwischenstück (60, 152) sich über die gesamte Länge der die Reihen der Krallen aufweisenden Randstreifen (58, 62) des Abdeckteils (40) erstreckt.

4. Wischblatt nach einem der Ansprüche 2 oder 3, **dadurch gekennzeichnet, dass** das Zwischenstück (60) aus einem Material besteht, dessen Elastizität größer ist als die des Materials, aus dem die mit den Ansätzen (56) versehenen Randstreifen (58, 62) des Abdeckteils (40) bestehen.

5. Wischblatt nach Anspruch 4, **dadurch gekennzeichnet, dass** das Material für das Zwischenstück eine elastische Dehnbarkeit von mindestens 200 Prozent aufweist.

6. Wischblatt nach Anspruch 4, **dadurch gekennzeichnet, dass** das Material für das Zwischenstück eine elastische Dehnbarkeit von mindestens 100 Prozent aufweist.

7. Wischblatt nach Anspruch 4, **dadurch gekennzeichnet, dass** das Material für das Zwischenstück eine elastische Dehnbarkeit von mindestens 50 Prozent aufweist.

8. Wischblatt nach einem der Ansprüche 1 bis 3, **dadurch gekennzeichnet, dass** die Dicke (158) des Zwischenstücks (152) kleiner ist als die Dicke (160) der krallenartigen Ansätze (156).

9. Wischblatt nach einem der Ansprüche 1 bis 8, **dadurch gekennzeichnet, dass** die Ansätze (56) die Haltekanten des Tragelements mit Krallen (72) untergreifen, deren quer zur Längserstreckung des Wischblatts gemessene Länge (74) größer ist als die Dicke (76) des Tragelements (12).

10. Wischblatt nach Anspruch 9, **dadurch gekennzeichnet, dass** die Länge (74) der Krallen (72) um den Faktor 1,7 größer ist als die Dicke (76) des Tragelements (12).

11. Wischblatt nach einem der Ansprüche 1 bis 10, **dadurch gekennzeichnet, dass** die Haltekanten des Tragelements (12) durch dessen voneinander abgewandte Längskanten gebildet sind.

12. Wischblatt nach einem der Anspruch 1 bis 11, **dadurch gekennzeichnet, dass** das für die Windabweisleiste (40) verwendete Material eine größere Elastizität aufweist als das Material, aus dem die Randstreifen (58, 62) des Abdeckteils (40) bestehen.

13. Wischblatt nach einem der Ansprüche 1 bis 12, **dadurch gekennzeichnet, dass** die Windabweisleiste (40) aus einem Elastomer besteht, dessen Shore-Härte A zumindest annähernd der Shore-Härte A der Wischleiste (24) entspricht.

## Claims

1. Wiper blade for cleaning panes, in particular motor vehicle panes, with an elastomeric wiper strip (24) which, arranged on one band surface (22) of a resilient supporting element (12) which is elongate in the manner of a band, can be placed against the pane (14), wherein at least sections of the other band surface (16) of the supporting element are covered by a wind deflector strip (40, 140) having at least two limbs (48, 50), said limbs engaging by means of claw-like lugs (56) arranged in rows in the longitudinal direction of the wiper blade under retaining edges of the supporting element, and the limbs are connected by an intermediate piece (60), **characterized in that** the distance between two rows of lugs can be increased at least in sections transversely with respect to the longitudinal extent of the wiper blade (10) counter to a restoring force, wherein the material used for the claw-like lugs has a lower degree of elasticity than the material used for the limbs (48, 50; 148, 150).

2. Wiper blade according to Claim 1, **characterized in that** the restoring force is brought about by the elastically deformable intermediate piece (60 or 152) which is located between the rows of lugs (56) and is connected thereto.

3. Wiper blade according to Claim 2, **characterized in that** the intermediate piece (60, 152) extends over the entire length of the border strips (58, 62) of the covering part (40), which border strips have the rows of claws.

4. Wiper blade according to either of Claims 2 and 3, **characterized in that** the intermediate piece (60) is composed of a material, the elasticity of which is greater than that of the material of which the border strips (58, 62) of the covering part (40), which border strips are provided with the lugs (56), are composed.

5. Wiper blade according to Claim 4, **characterized in that** the material for the intermediate piece has an elastic extensibility of at least 200 per cent.

6. Wiper blade according to Claim 4, **characterized in that** the material for the intermediate piece has an elastic extensibility of at least 100 per cent.

7. Wiper blade according to Claim 4, **characterized in that** the material for the intermediate piece has an elastic extensibility of at least 50 per cent.

8. Wiper blade according to one of Claims 1 to 3, **characterized in that** the thickness (158) of the intermediate piece (152) is smaller than the thickness (160) of the claw-like lugs (156).

9. Wiper blade according to one of Claims 1 to 8, **characterized in that** the lugs (56) engage under the retaining edges of the supporting element with claws (72), the length (74) of which, measured transversely with respect to the longitudinal extent of the wiper blade, is greater than the thickness (76) of the supporting element (12).

10. Wiper blade according to Claim 9, **characterized in that** the length (74) of the claws (72) is greater than the thickness (76) of the supporting element (12) by the factor 1.7.

11. Wiper blade according to one of Claims 1 to 10, **characterized in that** the retaining edges of the supporting element (12) are formed by the longitudinal edges thereof which face away from each other.

12. Wiper blade according to one of Claims 1 to 11, **characterized in that** the material used for the wind deflector strip (40) has a greater degree of elasticity than the material of which the border strips (58, 62) of the covering part (40) are composed.

13. Wiper blade according to one of Claims 1 to 12, **characterized in that** the wind deflector strip (40) is composed of an elastomer, the Shore hardness A of which at least approximately corresponds to the Shore hardness A of the wiper strip (24).

## Revendications

1. Balai d'essuie-glace pour nettoyer des vitres, notamment de véhicules automobiles, comprenant une raclette de balai d'essuie-glace (24) ayant l'élasticité du caoutchouc, qui, disposée au niveau de l'une des surfaces de bande (22) d'un élément de support (12) élastique à ressort allongé en forme de bande, peut être appliquée contre la vitre (14), l'autre surface de bande (16) de l'élément de support étant recouverte au moins en partie par une baguette déflectrice de vent (40, 140) présentant au moins deux branches (48, 50), lesquelles viennent en prise par le dessous avec des arêtes de retenue de l'élément de support par des saillies (56) de type griffes disposées en rangées dans la direction longitudinale du balai d'essuie-glace, et les branches étant connectées par une pièce intermédiaire (60), **caractérisé en ce que** la distance entre deux rangées de saillies peut être augmentée au moins en partie transversalement à l'étendue longitudinale du balai d'essuie-glace (10) à l'encontre d'une force de rappel, le matériau utilisé pour les saillies de type griffes présentant une plus faible élasticité que le matériau utilisé pour les branches (48, 50 ; 148, 150).

2. Balai d'essuie-glace selon la revendication 1, **caractérisé en ce que** la force de rappel est provoquée par la pièce intermédiaire (50, respectivement 152) élastiquement déformable située entre les rangées de saillies (56) et connectée à celles-ci.

3. Balai d'essuie-glace selon la revendication 2, **caractérisé en ce que** la pièce intermédiaire (60, 152) s'étend sur toute la longueur des bandes de bord (58, 62) de la partie de recouvrement (40) présentant les rangées de griffes.

4. Balai d'essuie-glace selon l'une quelconque des revendications 2 ou 3, **caractérisé en ce que** la pièce intermédiaire (60) se compose d'un matériau dont l'élasticité est supérieure à celle du matériau qui constitue les bandes de bord (58, 62) de la partie de recouvrement (40) pourvues des saillies (56).

5. Balai d'essuie-glace selon la revendication 4, **caractérisé en ce que** le matériau pour la pièce intermédiaire présente un allongement élastique d'au moins 200 pour cent.

6. Balai d'essuie-glace selon la revendication 4, **caractérisé en ce que** le matériau pour la pièce intermédiaire présente un allongement élastique d'au moins 100 pour cent.

7. Balai d'essuie-glace selon la revendication 4, **caractérisé en ce que** le matériau pour la pièce intermédiaire présente un allongement élastique d'au moins 50 pour cent.

8. Balai d'essuie-glace selon l'une quelconque des revendications 1 à 3, **caractérisé en ce que** l'épaisseur (158) de la pièce intermédiaire (152) est inférieure à l'épaisseur (160) des saillies (156) en forme de griffes.

9. Balai d'essuie-glace selon l'une quelconque des revendications 1 à 8, **caractérisé en ce que** les saillies (56) viennent en prise par le dessous avec les arêtes de retenue de l'élément de support par les griffes (72), dont la longueur (74) mesurée transversalement à l'étendue longitudinale du balai d'essuie-glace est supérieure à l'épaisseur (76) de l'élément de support (12).

10. Balai d'essuie-glace selon la revendication 9, **caractérisé en ce que** la longueur (74) des griffes (72) est supérieure d'un facteur 1,7 à l'épaisseur (76) de l'élément de support (12).

11. Balai d'essuie-glace selon l'une quelconque des revendications 1 à 10, **caractérisé en ce que** les arêtes de retenue de l'élément de support (12) sont formées par ses arêtes longitudinales opposées l'une à l'autre.

12. Balai d'essuie-glace selon l'une quelconque des revendications 1 à 11, **caractérisé en ce que** le matériau utilisé pour la baguette déflectrice de vent (40) présente une plus grande élasticité que le matériau constituant les bandes de bord (58, 62) de la partie de recouvrement (40).

13. Balai d'essuie-glace selon l'une quelconque des revendications 1 à 12, **caractérisé en ce que** la baguette déflectrice de vent (40) se compose d'un élastomère dont la dureté Shore-A correspond au moins approximativement à la dureté Shore-A de la raclette de balai d'essuie-glace (24).
